# EUROPEAN PATENT APPLICATION

(11) **EP 4 534 330 A1**
(43) Date of publication of application: **09.04.2025**
(21) Application number: 23816000.6
(22) Date of filing: 29.05.2023
(51) Int. Cl.: B60L 53/12, B60L 5/00, B60L 15/20, B60M 7/00, G08G 1/00, H02J 7/00, H02J 50/10, H02J 50/40, H02J 50/90

(54) **VEHICLE CONTROL DEVICE**

(30) Priority: 01.06.2022 JP 2022089580
(71) Applicant: DENSO CORPORATION, Kariya-city, Aichi 448-8661 (JP)
(72) Inventor: OBAYASHI, Kazuyoshi, Kariya-city, Aichi 448-8661 (JP); TANI, Keisuke, Kariya-city, Aichi 448-8661 (JP); YAMAGUCHI, Nobuhisa, Kariya-city, Aichi 448-8661 (JP)
(74) Representative: TBK
(86) International application number: PCT/JP2023/019873
(87) International publication number: WO 2023/234243

(57) **Abstract**

A vehicle control device for an in-motion power transfer system (1) that wirelessly powers a vehicle (10) during travel is provided, where the in-motion power transfer system is equipped with power transmitting coils (21) installed to a road and a power receiving coil (35) installed to the vehicle. The vehicle control device includes a travel route setting unit (111) configured to use a HD map to set a travel route that includes information regarding a lateral travel position of the vehicle on the road. The travel route setting unit is configured to set the travel route of the vehicle so that the vehicle is in a powerable state where the power receiving coil faces any one of the power transmitting coils when the vehicle travels in a powerable section, which is a section of the road where the power transmitting coils are embedded.

## Description

### [Cross Reference to Related Application]

This application is based on and claims the benefit of priority from Japanese Patent Application No. 2022-89580 filed June 1, 2022, the contents of each of which are incorporated herein by reference.

### [Technical Field]

This disclosure relates to a vehicle control device for an in-motion power transfer system.

### [Background Art]

In recent years, electric vehicles are becoming more popular. Each electric vehicle travels using electric power stored in an on-board battery to drive a motor that rotates the wheels. For such vehicles that use electric energy as driving power, an in-motion power transfer system for wireless power transfer using a technology called Dynamic Wireless Power Transfer (DWP) has been developed. In this in-motion power transfer system, power is transmitted in a wireless manner from power transmitting coils embedded underground to a power receiving coil mounted under the vehicle floor.

PTL 1 describes a map data generation device that provides a dynamic map by associating static information with dynamic information provided by other vehicles or roadside equipment in an autonomous driving assistance system. Typically, in an autonomous driving system (ADS), a travel route is determined and driving of the vehicle is controlled based on lane link (lane center line) in high-definition 3D map data, such as a high-definition map (HD map).

### [Citation List]

### [Patent Literature]

[PTL 1] JP2020-30362 A

### [Summary of the Invention]

In the conventional technology described above, there is an issue that, for example, when a vehicle travels the travel route set by the autonomous driving system, charging may fail if the vehicle continues to travel with the power receiving coil on the vehicle side facing none of the power transmitting coils on the road side and with these power receiving and transmitting coils offset from each other. In the above in-motion power transfer system, since the power transmitting coils are embedded underground, they are not easy to relocate.

In view of the above, it is an objective of this disclosure to provide a vehicle control device capable of transferring sufficient power while a vehicle equipped with a power receiving coil is traveling a set travel route.

The present disclosure may be implemented according to the following aspect.

One aspect of the present disclosure provides a vehicle control device used in an in-motion power transfer system that wirelessly powers a vehicle during travel. The in-motion power transfer system is equipped with power transmitting coils installed to a road and a power receiving coil installed to the vehicle. The vehicle control device includes a travel route setting unit configured to use a HD map to set a travel route that includes information regarding a lateral travel position of the vehicle on the road. The travel route setting unit is configured to set the travel route of the vehicle so that the vehicle is in a powerable state where the power receiving coil faces any one of the power transmitting coils when the vehicle travels in a powerable section, which is a section of the road where the power transmitting coils are embedded.

The travel route setting unit is configured to set the travel route of the vehicle so that the vehicle is in a powerable state where the power receiving coil faces any one of the power transmitting coils when the vehicle travels in a powerable section, which is a section of the road where the power transmitting coils are embedded. This enables stable power transfer when the vehicle travels the set travel route.

### [Brief Description of the Drawings]

The above and other objectives, features and advantages of the present disclosure will become more apparent from the following detailed description with reference to the accompanying drawings. The drawings are:
FIG. 1 is a block diagram illustrating a schematic configuration of an in-motion power transfer system according to a first embodiment of the present disclosure;
FIG. 2 is a block diagram illustrating a schematic configuration of a vehicle control device according to the first embodiment of the present disclosure;
FIG. 3 is a plan view schematically illustrating an arrangement of embedded power transmitting coils in a power transmission device according to the first embodiment;
FIG. 4 is a flowchart of a process of setting a travel route during autonomous driving, performed by the vehicle control device according to the first embodiment;
FIG. 5 is an illustration of an example display screen on a notification device;
FIG. 6 is a flowchart of a process of setting a travel route during autonomous driving, performed by a vehicle control device according to a second embodiment;
FIG. 7 is a plan view schematically illustrating an arrangement of embedded power transmitting coils in a power transmission device according to the second embodiment; and
FIG. 8 is a plan view schematically illustrating an arrangement of embedded power transmitting coils in a power transmission device according to another embodiment.

### [Description of the Embodiments]

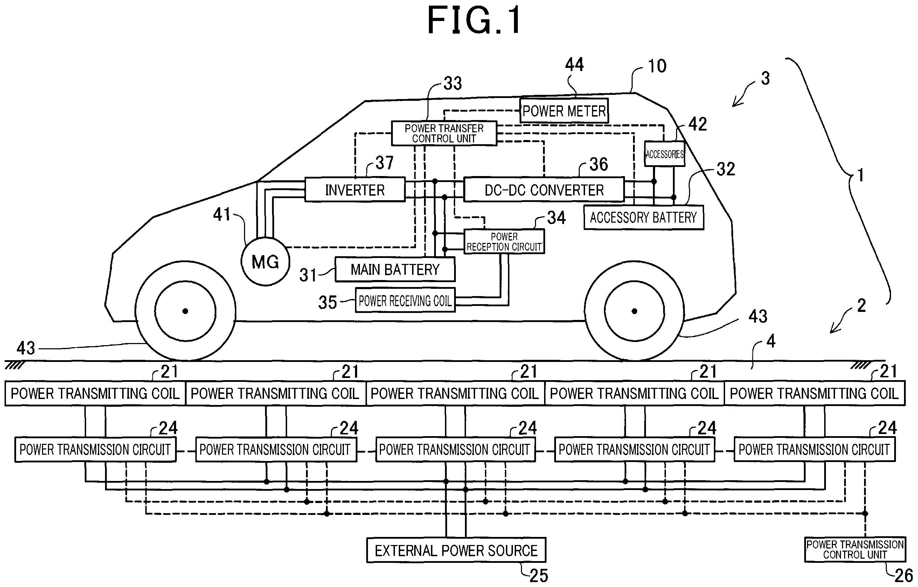

Hereinafter, a plurality of embodiments of the disclosure will be described with reference to FIGS. 1 to 8.

### A. First Embodiment:

### A1. Configuration of In-Motion Power Transfer System 1:

As illustrated in FIG. 1, the in-motion power transfer system 1 includes a power transmission device 2 installed to a road 4 and a power receiving device 3 installed to a vehicle 10. The in-motion power transfer system 1 is a system capable of wireless power transfer from the power transmission device 2 to the vehicle 10 while the vehicle 10 is in motion. The vehicle 10 is configured as an electric vehicle, a hybrid vehicle or the like.

The power transmission device 2 on the road 4 side includes a plurality of power transmitting coils 21, a plurality of power transmission circuits 24 that supply power by applying an AC voltage to the respective power transmitting coils 21, an external power source 25 (hereinafter referred to as a "power source 25") that supplies power to the plurality of power transmission circuits 24, and a power transmission control unit 26.

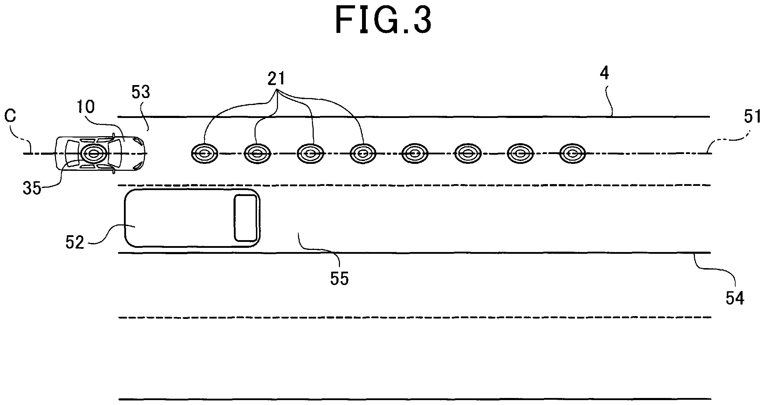

A plurality of power transmitting coils 21 are installed so as to be positioned in a plurality of locations along the forward direction of a road 4. The power transmitting coils 21 are divided into a plurality of sectors. The more specific arrangement of the embedded power transmitting coils 21 on the road 4 will be described later with reference to FIG. 3. Each power transmission circuit 24 is a circuit that converts the DC voltage supplied from the power source 25 into a highfrequency AC voltage and applies it to the power transmitting coil 21, and includes an inverter circuit, a filter circuit, and a resonance circuit. In the present embodiment, since the inverter circuit, the filter circuit, and the resonance circuit are well-known, detailed description thereof will be omitted.

The power source 25 is a circuit that supplies DC power to the power transmission circuits 24. For example, the power source 25 supplies power from a grid power source to the power transmission circuits 24 via a power factor corrector (PFC). In an alternative, the power source 25 may receive power from the grid power source and distribute converted 50/60 Hz AC to the power transmission circuits, and the PFC and AC-DC conversion are performed in each power transmission circuit. The PFC is not shown here. The DC voltage output from the power source 25 does not have to be a perfect DC voltage, and may include variations (ripples) to a certain extent. The power transmission control unit 26 causes the power transmission circuits 24 and the power transmitting coils 21 to perform power transmission.

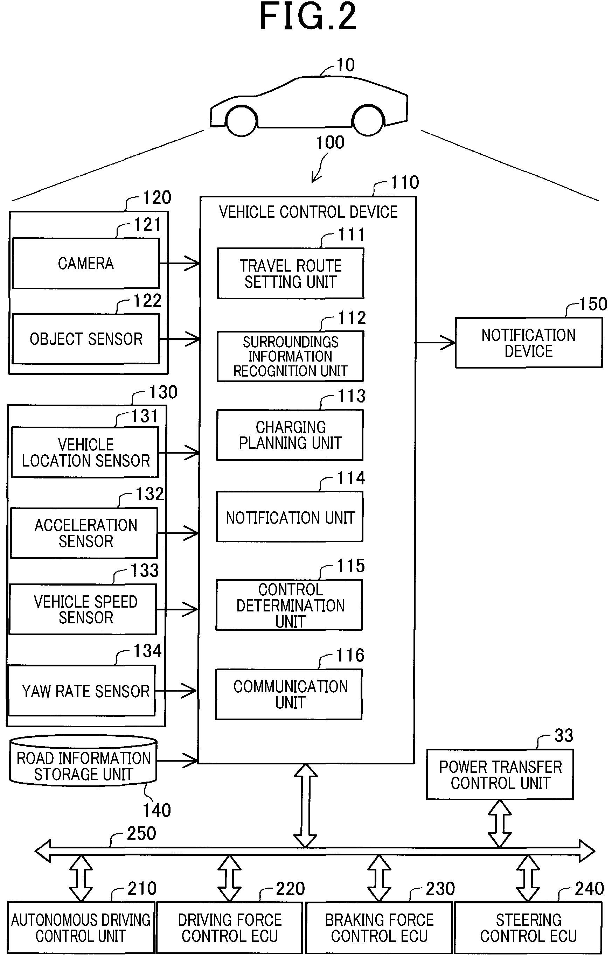

The vehicle 10 includes a main battery 31, an accessory battery 32, a power transfer control unit 33, a power reception circuit 34, a power receiving coil 35, a DC-DC converter circuit 36, an inverter circuit 37, a motor generator 41, accessories 42, tires 43, and a power meter 44. The vehicle 10 also includes an autonomous driving control system 100 (see FIG. 2) that is mainly related to autonomous driving control, but the configuration of these components will be described later using FIG. 2.

The power receiving coil 35 is connected to the power reception circuit 34. A main battery 31, the high voltage side of the DC-DC converter circuit 36, and the inverter circuit 37 are connected to the output of the power reception circuit 34. The accessory battery 32 and accessories 42 are connected to the low voltage side of the DC-DC converter circuit 36. The motor generator 41 is connected to the inverter circuit 37. In the first embodiment, the power receiving coil 35 is positioned in the vicinity of the center of the vehicle 10 in the lateral and longitudinal directions. The power receiving coil 35 receives the supplied power from the power transmitting coils 21.

The power reception circuit 34 includes a rectification circuit that converts the AC voltage output from the power receiving coil 35 into a DC voltage. The power reception circuit 34 may include a DC-DC converter circuit that converts the DC voltage generated by the rectification circuit into a voltage suitable for charging the main battery 31. The DC voltage output from the power reception circuit 34 may be used to charge the main battery 31 and drive the motor generator 41 via the inverter circuit 37. The DC voltage output from the power reception circuit 34 may also be used to charge the accessory battery 32 and drive the accessories 42 by stepping down the voltage using the DC-DC converter circuit 36.

The main battery 31 is a secondary battery that outputs a relatively high DC voltage to drive the motor generator 41. The motor generator 41 operates as a 3-phase AC motor and generates drive force for driving the vehicle 10. The motor generator 41 operates as a generator during deceleration of the vehicle 10 and generates a 3-phase AC voltage. The inverter circuit 37 converts the DC voltage of the main battery 31 into a 3-phase AC voltage and supplies it to the motor generator 41 when the motor generator 41 operates as a motor. The inverter circuit 37 converts the 3-phase AC voltage output from the motor generator 41 into a DC voltage and supplies it to the main battery 31 when the motor generator 41 operates as a generator.

The DC-DC converter circuit 36 converts the DC voltage of the main battery 31 into a DC voltage suitable for driving the accessories 42 and supplies it to the accessory battery 32 and the accessories 42. The accessory battery 32 is a secondary battery that outputs a DC voltage to drive the accessories 42. The accessories 42 include an air conditioning system of the vehicle 10, an electric power steering system, peripheral devices such as headlights, blinkers, wipers and various accessories of the vehicle 10. The DC-DC converter circuit 36 may be omitted.

The power meter 44 measures an amount of power supplied from the power receiving coil 35. The amount of power measured by the power meter 44 is stored in a storage unit (not shown). The amount of power measured by the power meter 44 may be displayed, for example, on a monitor screen installed in the vehicle (the notification device 150 described later with reference to FIG. 2). The power transfer control unit 33 controls the power reception circuit 34 to perform power reception when wirelessly supplied with power during travel.

### A2. Configuration of Vehicle Control Device 110:

As illustrated in FIG. 2, the vehicle 10 is equipped with the autonomous driving control system 100. The vehicle 10 is capable of autonomous driving and manual driving. In autonomous driving, the vehicle 10 is automatically steered and driven even when the steering wheel for driving the vehicle 10 is not operated by the driver. In some modes of autonomous driving, steering is performed by the driver, and acceleration and deceleration are automatically controlled. In manual driving, the vehicle 10 is steered by the driver operating the steering wheel, and acceleration and deceleration of the vehicle 10 is controlled by the driver operating the accelerator pedal and the brake pedal.

In the present embodiment, the autonomous driving control system 100 includes a vehicle control device 110, surroundings sensors 120, internal sensors 130, a road information storage unit 140, an autonomous driving control unit 210, a driving force control ECU 220, a braking force control ECU 230, and a steering control ECU 240. ECU is an abbreviation for Electronic Control Unit. The vehicle control device 110, the autonomous driving control unit 210, the driving force control ECU 220, the braking force control ECU 230, and the steering control ECU 240, the power transfer control unit 33 are connected via an on-board network 250.

The surroundings sensors 120 acquire surroundings information outside the vehicle, which is necessary for autonomous driving. The surroundings sensors 120 include a camera 121 and an object sensor 122. The camera 121 captures and acquires images of surroundings of the vehicle 10. The object sensor 122 detects the surroundings of the vehicle 10. The object sensor 122 may be an object sensor using reflected waves, such as a laser radar, a millimeter wave radar, an ultrasonic sensor or the like.

The internal sensors 130 include a vehicle location sensor 131, an acceleration sensor 132, a vehicle speed sensor 133, and a yaw rate sensor 134. The vehicle location sensor 131 detects a current location of the vehicle 10. The vehicle location sensor 131 may be a Global Navigation Satellite System(s) (GNSS), a gyro sensor or the like.

The acceleration sensor 132 is a detector that detects the acceleration of the vehicle 10. The acceleration sensor 132 may include a longitudinal acceleration sensor which detects an acceleration in the longitudinal direction of the vehicle 10 and a lateral acceleration sensor which detects an acceleration in the lateral direction of the vehicle 10. The vehicle speed sensor 133 measures the current travel speed of the vehicle 10. The yaw rate sensor 134 detects the yaw rate (angular rate of rotation) around the vertical axis through the center of gravity of the vehicle 10. For example, a gyro sensor may be used as the yaw rate sensor 134. The surroundings sensors 120 and the internal sensors 130 transmit various types of data acquired to the vehicle control device 110.

The road information storage unit 140 stores detailed road information regarding the road on which the vehicle 10 is planning to travel. The road information is static information included in the high-definition map (HD map) as high-definition 3D map data. For example, the road information includes information such as the number of lanes, lane widths, center coordinates of each lane, locations of stop lines, locations of traffic lights, locations of guardrails, road grades, road types such as curved and straight roads, curvature radii of curves, and lengths of curve sections. The road information includes information regarding powerable sections where the power transmitting coils 21 described later are embedded. These items of road information are updated to the latest information as appropriate via a wide-area network.

The notification device 150 notifies occupants (mainly the driver) of the vehicle 10 of various items of information using images and sound. The various items of information include, for example, information to make fine adjustments of the lateral position within the lane, and information to change lanes. The notification device 150 includes a display device and a speaker. For example, a Head-Up Display (HUD) or a display on the instrument panel may be used as the display device. The images include moving images and text strings.

The vehicle control device 110 includes a travel route setting unit 111, a surroundings information recognition unit 112, a charging planning unit 113, a notification unit 114, a control determination unit 115, and a communication unit 116. The vehicle control device 110 is configured as a microcomputer including a central processing unit (CPU), a read-only memory (ROM), a random-access memory (RAM), and an input/output interface (I/O). Functions of these components of the vehicle control device 110 may be implemented by the CPU executing preinstalled programs. In an alternative embodiment, some or all of these components may be implemented by hardware circuits.

The travel route setting unit 111 sets the route for the vehicle 10 to travel. More specifically, the travel route setting unit 111 sets the travel route to the preset destination using the road information stored in the road information storage unit 140. The "travel route" in the present embodiment does not simply refer to the direction to the destination, but indicates the detailed route, including travel lanes and travel positions within the road. The travel route setting unit 111 corresponds to a travel route setting device.

The surroundings information recognition unit 112 recognizes surroundings information using detection signals from the surroundings sensors 120. More specifically, the surroundings information recognition unit 112 recognizes the presence and positions of the left and right lane markings of the road being traveled, the presence and positions of traffic lights and their instructions, the presence of other vehicles, their positions, sizes, distances, travel directions, the presence and actions of the drivers of other vehicles, the presence of people in the vicinity of other vehicles, their positions, etc., as surroundings information, based on the images captured by the camera 121 and the output signals of the object sensor 122. The surroundings information recognition unit 112 may acquire and recognize some or all of these items of information through wireless communications with traffic lights, external servers, etc.

The charging planning unit 113 devises a charging plan using information from the road information storage unit 140 and the vehicle location sensor 131 in order to allow the in-motion power transfer system 1 to supply power to the vehicle 10 while it is traveling, that is, in motion. Specifically, for example, a charging plan is devised so that the charging section described later is included in the travel route to the destination. The travel route setting unit 111 takes into account the charging plan devised by the charging planning unit 113, and sets the travel route so that sufficient power is supplied until the vehicle 10 arrives at the destination.

The notification unit 114 is configured to notify the occupants of various items of information, such as the travel route and location information of the vehicle, using the above notification device 150 that is capable of displaying images and outputting voices. The notification unit 114 provides a notification of information about the hands-on request according to the process by the control determination unit 115 depending on the travel condition of the vehicle 10. The hands-on request is a request for switching from the hands-off state, in which the driver has no hand on the steering wheel during autonomous driving, to the hands-on state, in which the driver has at least one hand on the steering wheel. The notification unit 114 notifies information on the current amount of electric power according to processing by the control determination unit 115 according to the travel condition of the vehicle 10.

The control determination unit 115 is configured to determine controls regarding travel of the vehicle 10 and then output the determined controls to the autonomous driving control unit 210 via the on-board network 250, thereby controlling the vehicle 10. The communication unit 116 is configured to acquire, for example, traffic information, weather information, accident information, obstacle information, traffic regulation information, etc. from an information center (not shown) via an antenna (not shown). The communication unit 116 may be configured to acquire various items of information from other vehicles via vehicle-to-vehicle communications. The communication unit 116 may be configured to acquire various items of information from roadside equipment installed at various locations on roads via roadside-to-vehicle communications.

The autonomous driving control unit 210 is configured as a microcomputer including a central processing unit (CPU), a random-access memory (RAM), a read only memory (ROM), and other components. The autonomous driving function may be implemented by the CPU executing preinstalled programs. The autonomous driving control unit 210 controls the driving force control ECU 220, the braking force control ECU 230, and the steering control ECU 240, to cause the vehicle 10 to travel along the route set by the travel route setting unit 111. The autonomous driving control unit 210 may, for example, provide merging assistance when the vehicle 10 makes a lane change to an adjacent lane, to cause the vehicle 10 to travel from a reference line of the lane in which the vehicle 10 is traveling to a reference line of the adjacent lane.

The driving force control ECU 220 is an electronic control unit configured to control an actuator that generates vehicle driving forces for the vehicle 10, such as an engine or the like. During manual driving by the driver, the driving force control ECU 220 controls a power source, such as an engine, an electric motor or the like, in response to a depression amount of an accelerator pedal. During autonomous driving, the driving force control ECU 220 controls the power source in response to a requested driving force calculated by the autonomous driving control unit 210.

The braking force control ECU 230 is an electronic control unit configured to control a braking actuator that generates vehicle braking forces for the vehicle 10. During manual driving by the driver, the braking force control ECU 230 controls the braking actuator in response to a depression amount of a brake pedal. During autonomous driving, the braking force control ECU 230 controls the braking actuator in response to a requested braking force calculated by the autonomous driving control unit 210.

The steering control ECU 240 is an electronic control unit configured to control a motor that generates a steering torque. During manual driving by the driver, the steering control ECU 240 controls the motor in response to the operation of the steering wheel to generate an assist torque for the steering operation. This allows the driver to perform the steering operation with a small amount of force, thereby implementing steering of the vehicle 10. During autonomous driving, the steering control ECU 240 controls the motor in response to a requested steering angle calculated by the autonomous driving control unit 210 to perform steering.

In autonomous driving, the travel route setting unit 111 makes a travel plan of the vehicle 10 up to several seconds later based on the road information stored in the road information storage unit 140, the current location detected by the vehicle location sensor 131 and the locations and speeds of other vehicles around the vehicle 10. This travel plan includes a steering plan and an acceleration/deceleration plan, etc. of the vehicle 10 up to several seconds later.

Basically, the travel route is set using the lane link 51 so that the vehicle 10 travels in the center of the travel lane. That is, as illustrated in FIG. 3, the travel route is set so that the laterally central line C of the vehicle 10 is positioned on the lane link 51. The lane link 51 has the same meaning as the lane center line.

### A3. Details of Embed Positions of Power Transmitting Coils 21:

The on-road embed positions of the power transmitting coils 21 of the power transmission device 2 in the in-motion power transfer system 1 described in detail above will now be described. The power transmitting coils 21 are embedded in the road with respect to the guide line. The guide line is static information included in the HD map, and is used when the travel route is set using the HD map in the travel route setting unit 111. In the first embodiment, the guide line is the "lane link 51", and the power transmitting coils 21 are embedded on the lane link 51. The power transmitting coils 21 positioned on the lane link 51 are also referred to as "power transmitting coils 21 for central power transfer" hereinafter.

In the first embodiment, since the power receiving coil 35 is provided near the center of the vehicle 10, the power receiving coil 35 faces any one of the power transmitting coils 21 in a state where the laterally central line C of the vehicle 10 (hereinafter simply referred to as a "center line C") and the lane link 51 coincide with each other. The state where the vehicle 10 is traveling with the power receiving coil 35 facing any one of the power transmitting coils 21 is referred to as a "powerable state". The section of the road 4 in which the power transmitting coils 21 are embedded is referred to as a "powerable section".

This powerable section may include information not only about the section "from 30 meters before the specific intersection with traffic lights to that intersection", but also about "where in that lane the power transmitting coils 21 are embedded". Information on the powerable section is pre-stored in the road information storage unit 140. For example, when power transmitting coils 21 are newly embedded, the information is updated to reflect the latest situation, as appropriate. Since general vehicles often slow down or stop in a section (several dozen meters) before an intersection with traffic lights, actively installing power transmitting coils 21 in such a section enables more stable power transfer.

### A4. Process by Vehicle Control Device 110:

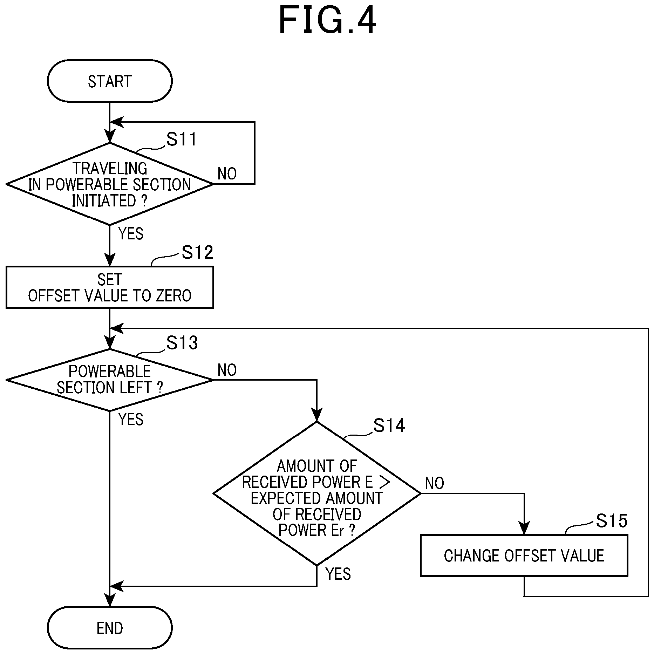

Subsequently, the process performed by the vehicle control device 110 described in detail above for setting the travel route during autonomous driving will now be described. The process illustrated in FIG. 4 is performed repeatedly at predefined time intervals while the vehicle 10 is traveling. In addition to being performed at predefined time intervals, the above process may also be performed, as appropriate, when the time at which the vehicle is expected to enter the powerable section is approaching or after that time has elapsed.

As illustrated in FIG. 4, at step 11 (hereinafter, step will be abbreviated as "S"), it is determined whether the vehicle has initiated traveling in the powerable section. For example, based on information from the vehicle location sensor 131, the surroundings sensors 120, and the road information storage unit 140, and signals from the surroundings information recognition unit 112, it is determined whether the vehicle 10 has entered the powerable section where the power transmitting coils 21 are embedded. If it is determined that the vehicle 10 has initiated traveling in the powerable section (S11: YES), the process proceeds to S12, where the offset value is set to zero. The "offset value" as used here is a distance from the lane link 51 (see FIG. 3) to the center line C of the vehicle 10 in the lateral direction of the lane 53.

Next, at S13, it is determined whether the vehicle 10 has left the powerable section. If it is determined that the vehicle 10 has not left the powerable section (S13: NO), the process proceeds to S14, where it is determined whether the amount of power received E is greater than an expected amount of received power Er. The expected amount of received power Er is set, for example, to a value slightly less than the amount of received power that is assumed to be acquired after traveling in the powerable section for a predefined time in the powerable state where the power receiving coil 35 of the vehicle 10 is facing any one of the power transmitting coils 21. The determination of whether the amount of received power E is greater than the expected amount of received power Er is made, for example, by comparing the amount of received power E acquired from the power meter 44 during travel with the above expected amount of received power Er.

If it is determined that the amount of received power E is greater than the expected amount of received power Er (S14: YES), then this control process ends. The state where the amount of received power E is greater than the expected amount of received power Er means that the vehicle is being properly supplied with power in the powerable section that is being traveled currently. Therefore, the offset value is kept at zero until travel in that powerable section is terminated. This allows travel with the center line C of the vehicle 10 coinciding with the lane link 51 to be maintained, and power reception to be performed smoothly.

On the other hand, if at S14 it is not determined that the amount of received power E is greater than the expected amount of received power Er, that is, if the amount of received power E is equal to or less than the expected amount of received power Er (S14: NO), then the process proceeds to S15, where the offset value is changed. The state where the amount of received power E is less than or equal to the expected amount of received power Er means that the amount of received power E has not reached the expected amount of received power Er, and that, although the vehicle is travelling in the powerable section, an appropriate amount of power has not been received, i.e. the vehicle is not in the powerable state.

The offset value to be changed at S15 is set to, for example, a value between a few centimeters to 10 centimeters toward the sidewalk in the lateral direction of lane 53. In this case, when another vehicle 52 traveling in the adjacent lane 55 is detected by the surroundings sensors 120, as illustrated in FIG. 3, the direction of offset may be set for the vehicle 10 to move away from the other vehicle 52, or when another vehicle 52 traveling in the adjacent lane 55 is not detected by the surroundings sensors 120, it may be set for the vehicle 10 to move closer to the center line 54.

In principle, as long as the vehicle is traveling with the center line C of the vehicle 10 coincident and the lane link 51 coincident in the powerable section, the vehicle could receive an appropriate amount of power. However, even when the route set by the travel route setting unit 111 is a route such that the lane link 51 and the center line C of the vehicle 10 coincide with each other, the lane link 51 and the center line C of the vehicle 10 may not coincide if there is a setting error or if there is an error in the position where the vehicle is actually traveling. Thus, in cases where the lane link 51 and the center line C of the vehicle 10 do not coincide with each other, the power receiving coil 35 fails to face any one of the power transmitting coils 21 even when the vehicle is traveling in the powerable section, resulting in a non-powerable state, and thus the vehicle can not receive power.

The process steps at S14 and S15 are performed to detect such poor power reception in the powerable section and cause the travel route setting unit 111 to correct the lateral position of the vehicle 10 in the lane 53, thereby bringing the power receiving coil 35 face to face with any one of the power transmitting coils 21 and allowing the vehicle to receive power.

The process steps at S14 and S15 are repeated until the vehicle leaves the powerable section (S13: YES) or the amount of received power E becomes greater than the expected amount of received power Er (S14: YES). At S15, the offset value change may be made a predefined number of times to cause the vehicle to move toward the sidewalk, and hereafter the offset value change may further be made a predefined number of times to cause the vehicle to move toward the centre line 54.

If at step S11 it is determined that the vehicle has not initiated traveling in the powerable section (S11: NO), the process step S11 is repeated until traveling in the powerable section is initiated. If at step S13 it is determined that the vehicle has left the powerable section (S13: YES), this control process ends.

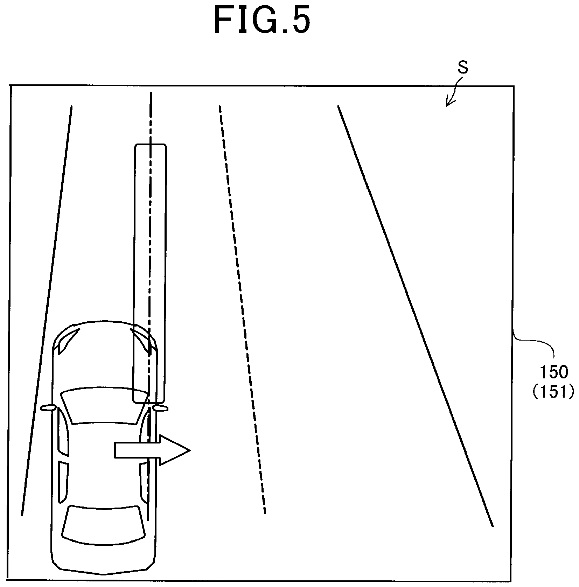

After the offset value is changed at step S15, the lateral position of the vehicle 10 traveling in the lane is corrected. This correction information, that is, information about how the vehicle 10 will move in the lateral direction, may be notified to the occupants using the notification device 150 to be viewed. Specifically, as illustrated in FIG. 5, a notification may be provided by displaying the image S on the display screen 151 of the HUD or the like as the notification device 150, where this image includes an arrow indicating the direction of movement of the vehicle.

### [Advantages]

In the first embodiment described above, the travel route setting unit 111 sets the travel route based on the amount of received power E so that, when the vehicle 10 travels in the powerable section, the vehicle 10 is in the powerable state where the power receiving coil 35 faces any one of the power transmitting coils 21. Specifically, poor power reception in the powerable section is detected based on the amount of received power, and the lateral position of the vehicle 10 in the lane 53 is corrected by the route setting unit 111 so that the power receiving coil 35 faces any one of the power transmitting coils 21, thereby achieving a power receivable state. This allows stable power transfer when the vehicle 10 travels the travel route set using the lane link 51 stored in the HD map. In addition, even in a case where there are deviations between the location information of the lane link 51 and the actual locations where the power transmitting coils 21 are embedded, a correction of the travel location can be made, thereby ensuring the amount of received power.

In the first embodiment described above, the vehicle control device 110 includes the charging planning unit 113 that devises a charging plan so that the travel route to the destination includes the powerable section described later. The charging plan devised by the charging planning unit 113 is taken into account by the travel route setting unit 111, which allows the vehicle 10 to receive sufficient power until the vehicle 10 arrives at the destination after traveling the set travel route.

In the first embodiment described above, after the offset value has been changed, information about how the vehicle 10 will move in the lateral direction is provided to the occupants by the notification device 150. This allows the occupants to preview how the vehicle 10 will move, which provides the occupants with a sense of security.

### B. Second Embodiment:

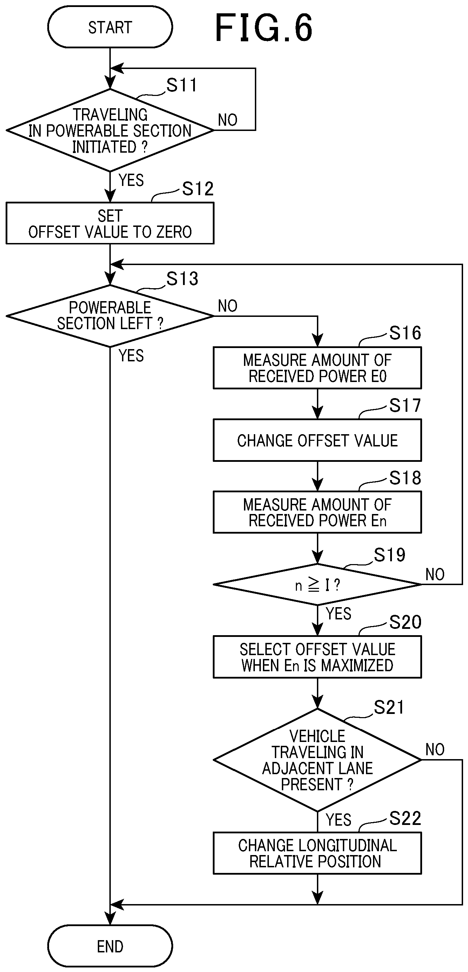

A second embodiment will now be described with reference to FIG. 6. In the second embodiment and each of the embodiments described later, the overall configuration of the in-motion power transfer system 1 (FIG. 1) and the configuration of the vehicle control device 110 (FIG. 2) are substantially the same as those of the first embodiment described above. Thus, the same reference numbers are assigned to substantially the same elements and duplicated description thereof will be omitted.

In the second embodiment, the process steps S16 to S22 are performed instead of the process steps S14 to S15 in the first embodiment, and the second embodiment is otherwise the same as the first embodiment. As illustrated in FIG. 6, if at S13 it is determined that the vehicle 10 has not left the powerable section (S13: NO), then the process proceeds to S16, where the amount of received power E0 is measured. Next, at S17, the offset value is changed. The offset value to be changed is set to a value between a few centimeters to 10 centimeters, for example, toward the sidewalk in the lateral direction, in the same manner as in the first embodiment described above. However, unlike the first embodiment, the offset value is changed only by a pre-set value, regardless of the amount of received power E0 measured at S16.

Then, at S18, the amount of received power En (n=1, 2, 3, ...) after changing the offset value is measured. Next, at S19, it is determined whether n is greater than or equal to I. "I" is a threshold number of times, for example, an arbitrary pre-set integer. If n is less than I at S19 (S19: NO), the process steps S17 and S18 are repeated until n becomes greater than or equal to I.

That is, at steps S17 to S19, the offset value is changed I times (i.e., pre-set number of times), and the travel position in the lateral direction of the lane 53 is thereby gradually shifted, and the amount of received power En is measured each time the travel position is shifted. After the offset value is changed at S17, there should be a suitable amount of elapsed time before the amount of received power En is measured at S18. In an alternative where the process steps S17 and S18 are performed continuously, the amount of received power En may be measured during travel while changing the offset value, and the offset value at which the amount of received power becomes maximal may be detected. In this case, taking into account an increase or decrease in the amount of received power due to absence of the power transmitting coils 21 in the travel direction of the vehicle as appropriate, the vehicle is driven to travel at a certain constant speed, and an increase or decrease in the amount of received power arising from changes in the offset value is detected.

At S19, if n is greater than or equal to I (S19: YES), then the process proceeds to S20, where the plurality of amounts of received power E1, E2, E3, E4, ..., En acquired are compared, and an offset value is selected when the amount of received power En is maximized. After the offset value is selected at S20, it is determined at S21 whether another vehicle 52 is traveling in a lane 55 adjacent to the lane 53 in which the vehicle 10 is traveling (hereinafter simply referred to as an "adjacent lane 55"). This determination is made by the surroundings information recognition unit 112 based on signals from the surroundings sensors 120.

If the other vehicle 52 is traveling in the adjacent lane 55 (S21: YES), the process proceeds to S22, where the control determination unit 115 changes the longitudinal relative position of the vehicle 10 to the other vehicle 52 so that the vehicle 10 is spaced apart from the other vehicle 52 in the longitudinal direction. Specifically, controlling the speed of the vehicle 10 to be lower or higher allows the vehicle 10 to be spaced apart from the other vehicle 52 while maintaining its lateral position in the lane 53, that is, while keeping the vehicle 10 in the powerable state. Thereafter, this control process ends.

The second embodiment can provide the same advantages as the first embodiment. Furthermore, as illustrated in the process steps S16 to S19, the lateral travel position in the lane 53 is slightly shifted gradually as appropriate, and the offset value is determined when the amount of received power En is maximized by comparing amounts of received power En measured. This allows the best position for achieving a good powerable state to be detected.

As illustrated in the process steps S21 and S22, when another vehicle 52 is traveling in the adjacent lane 55, the longitudinal position of the vehicle 10 relative to the vehicle 52 is changed so as to cause the vehicle 10 to move away from the vehicle 52. In particular, in a situation where the other vehicle 52 is a large vehicle and is close to the vehicle 10 in the lateral direction, the driver is likely to feel a sense of pressure or danger. To avoid such a situation, the vehicle 10 moves away from the other vehicle 52 in the longitudinal direction instead of moving away from the other vehicle 52 in the lateral direction, thus ensuring safety and driving comfort while still maintaining the powerable state.

### C. Third Embodiment:

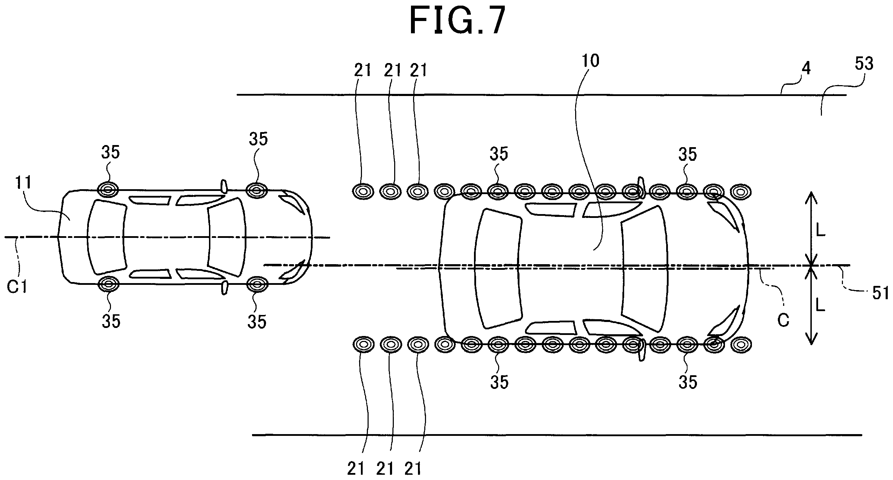

A third embodiment will now be described with reference to FIG. 7. As illustrated in FIG. 7, the third embodiment differs from the first embodiment in that the power receiving coil 35 is not positioned in the vicinity of the center of the vehicle 10, but rather inside the tires 43 or around the tires 43 and around the lower side of the suspension device that the vehicle 10 is equipped with. Furthermore, the power transmitting coils 21 are embedded at each of lateral positions separated leftward and rightward away from the lane link 51 by a predefined distance L so that a plurality of the power transmitting coils 21 are arranged along each of two lines parallel to each other in plan view.

The distance between the two lines is set, for example, to be substantially the same as the distance between the power receiving coils 35 in the lateral direction of the vehicle 10 that is specified as the standard. As configured in this manner, when the vehicle 10 is traveling with the center line C of the vehicle 10 coinciding with the lane link 51, the power receiving coils 35 face the power transmitting coils 21. In FIG. 7, although the center line C and the lane link 51 are depicted as coinciding, the lane link 51 and the center line C are shown as being slightly shifted for the sake of illustration. The power transmitting coils 21 that are installed at a predefined distance from the lane link 51, as described above, are hereinafter also referred to as "power transmitting coils 21 for tire power transfer".

In the third embodiment, the control described in detail in the first and second embodiments (see FIGS. 4 and 6) is performed in the same manner. For example, in the case of a small-sized vehicle 11 with a width less than the standard, the left and right power receiving coils 35 can not face the power transmitting coils 21 when the center line C1 of the small-sized vehicle 11 coincides with the lane link 51. As illustrated in FIG. 7, in a state where the center line C1 is spaced apart from the lane link 51, the power receiving coils 35 on one side (left side as viewed in the travel direction in the example illustrated in FIG. 7) are facing the power transmitting coils 21. When using the control as illustrated in FIG. 4, the amount of received power is compared with the expected amount of received power Er for the wheels on one side at S14.

According to the third embodiment, even when the small-sized vehicle 11 initiates traveling in the powerable section but in a non-powerable state where the center line C1 of the small-sized vehicle 11 coincides with the lane link 51, the travel position of the small-sized vehicle 11 in the lateral direction is corrected so that the power receiving coils 35 on one side face the power transmitting coils 21. This allows the small-sized vehicle to be in the powerable state and thus, as in the first and second embodiments above, allows the small-sized vehicle to receive power in an appropriate manner.

### D. Other Embodiments:

(D1) In each of the above embodiments, the vehicle 10 may not include the autonomous driving control system 100. In this configuration, it may be enough to just cause the route setting unit 111 to set the route to the destination using the road information stored in the road information storage unit 140. In addition, although it has been assumed that the vehicle control device 110 is mounted to the vehicle 10, this configuration is not necessarily required. For example, the driver may drive the vehicle manually while using a navigation application on a portable device, such as a smartphone, which includes a function as the travel route setting unit 111. In such a configuration, the correction information for the travel position in the lateral direction of the lane 53 may be displayed on the portable device.

(D2) Furthermore, in each of the above embodiments, setting control of the travel route in autonomous driving has been described as an example, but the above control may also be performed in manual driving. In such a configuration, the correction information when the offset value is changed may be notified to the notification device 150, and the driver may operate the steering wheel based on the notified correction information.

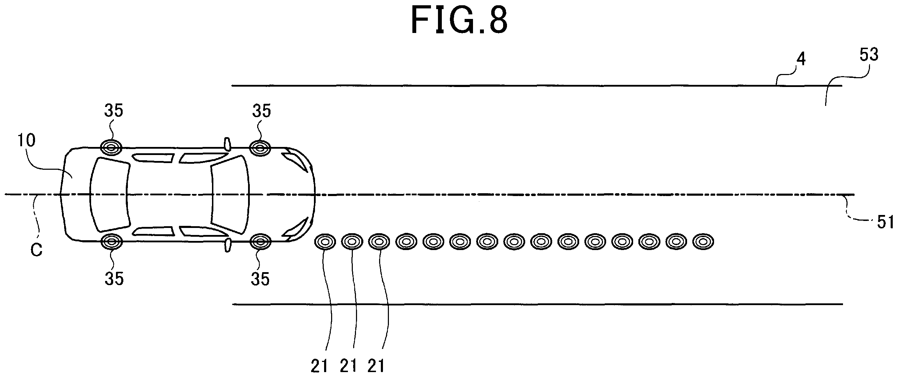

(D3) In each of the above embodiments, the power transmission device 2 is configured to include either the power transmitting coils 21 for tire power transfer or the power transmitting coils 21 for central power transfer. In an alternative, the power transmission device 2 may be configured to include both the power transmitting coils 21 for tire power transfer and the power transmitting coils 21 for central power transfer. In addition, a plurality of power transmitting coils 21 may be arranged adjacent to each other in the lateral direction of the lane 53. Furthermore, as illustrated in FIG. 8, the power transmitting coils 21 may be provided only on one side of the lane link 51, spaced apart from the lane link 51.

(D4) In each of the above embodiments, the process of determining whether the vehicle has left the powering section shown at S13 may be omitted. In the second embodiment described above, during the repetitive process steps S17 to S19 in FIG. 6, the determination process of determining whether the vehicle has left the powerable section corresponding to S13 may be inserted, where if the vehicle 10 has left the powerable section during this process, the control process as illustrated in FIG. 6 may be terminated.

(D5) In the above third embodiment, a vehicle information acquisition unit (not shown) included in the in-motion power transfer system 1 may be used to acquire the installation spacing of the power transmitting coils 21 in the vehicle 10 or small-sized vehicle 11 as vehicle information in advance. When the installation spacing of the power transmitting coils 21 and the installation spacing of the power receiving coils 35 do not match, a wide-area communication unit (not shown) included in the in-motion power transfer system 1 may transmit this information to the vehicle control device 110. The travel route setting unit 111 may then set a travel route for which reception of power via wheels on one side is assumed.

(D6) In each of the above embodiments, when changing the offset value, the offset direction and amount may be changed each time based on the information from the surroundings sensors 120 and the road information storage unit 140. For example, when a pedestrian is detected walking along the sidewalk, an offset value change in the opposite direction from the sidewalk may be made. In an alternative, a safe travel route may first be set according to the environmental situation of the vehicle 10 based on the information from the surroundings sensors 120 and the road information storage unit 140, and an offset value change for comparing the amounts of received power may be made after the environmental situation has improved.

The present disclosure is not limited to any of the embodiments described above but may be implemented by a diversity of other configurations without departing from the scope of the disclosure. For example, the technical features of the embodiments corresponding to the technical features of the respective aspects may be replaced or combined appropriately, in order to solve some or all of the issues described above or in order to achieve some or all of the advantages described above. Any of the technical features may be omitted appropriately unless the technical feature is described as essential herein.

### (Clause 1)

A vehicle control device for an in-motion power transfer system (1) that wirelessly powers a vehicle (10) during travel, the in-motion power transfer system being equipped with power transmitting coils (21) installed to a road and a power receiving coil (35) installed to the vehicle, the vehicle control device comprising:
a travel route setting unit (111) configured to use a HD map to set a travel route that includes information regarding a lateral travel position of the vehicle on the road, the travel route setting unit being configured to set the travel route of the vehicle so that the vehicle is in a powerable state where the power receiving coil faces any one of the power transmitting coils when the vehicle travels in a powerable section, which is a section of the road where the power transmitting coils are embedded.

### (Clause 2)

The vehicle control device according to clause 1, wherein the travel route setting unit is configured to determine, based on an amount of received power, which is an amount of power received by the vehicle in the in-motion power transfer system, whether the vehicle is in the powerable state, and in response to determining that the vehicle is not in the powerable state, change the travel route by shifting a travel position of the vehicle in the lateral direction by a predefined amount.

### (Clause 3)

The vehicle control device according to clause 1, wherein the travel route setting unit is configured to sequentially sets, in the powerable section, a plurality of travel routes at different travel positions in the lateral direction, sequentially measure a plurality of amounts of received power from the in-motion power transfer system during travel along respective ones the plurality of travel routes, and set, as the travel route to travel in a remaining portion of the powerable section, the travel position in the lateral direction corresponding to a maximum amount of received power among the plurality of measured amounts of received power.

### (Clause 4)

The vehicle control device according to any one of clauses 1 to 3, further comprising a charging planning unit (113) configured to acquire information about the powerable section and use the acquired information about the powerable section to devise a charging plan during travel of the vehicle, wherein the travel route setting unit is configured to set the travel route of the vehicle using the charging plan devised by the charging planning unit.

### (Clause 5)

The vehicle control device according to any one of clauses 1 to 4, further comprising a notification unit (114) configured to provide a notification via a notification device (150) of guidance information to the travel route set by the travel route setting unit.

### (Clause 6)

The vehicle control device according to any one of clauses 1 to 5, further comprising a control determination unit (115) configured to determine controls for driving the vehicle, wherein the control determination unit is configured to, when another vehicle is traveling in an adjacent lane to a lane in which the vehicle is traveling in the powerable state, determine the controls by changing a longitudinal position of the vehicle relative to the other vehicle so as to cause the vehicle to move away from the other vehicle.

### (Clause 7)

The vehicle control device according to any one of clauses 1 to 6, wherein the travel route setting unit is configured to set the travel route with respect to lane link information included in the HD map.

### (Clause 8)

The vehicle control device according to any one of clauses 1 to 7, wherein the vehicle is capable of both autonomous driving and manual driving along the travel route set by the travel route setting unit.

## Claims

1. A vehicle control device for an in-motion power transfer system (1) that wirelessly powers a vehicle (10) during travel, the in-motion power transfer system being equipped with power transmitting coils (21) installed to a road and a power receiving coil (35) installed to the vehicle, the vehicle control device comprising:
a travel route setting unit (111) configured to use a HD map to set a travel route that includes information regarding a lateral travel position of the vehicle on the road, the travel route setting unit being configured to set the travel route of the vehicle so that the vehicle is in a powerable state where the power receiving coil faces any one of the power transmitting coils when the vehicle travels in a powerable section, which is a section of the road where the power transmitting coils are embedded.

2. The vehicle control device according to claim 1, wherein
the travel route setting unit is configured to determine, based on an amount of received power, which is an amount of power received by the vehicle in the in-motion power transfer system, whether the vehicle is in the powerable state, and in response to determining that the vehicle is not in the powerable state, change the travel route by shifting a travel position of the vehicle in the lateral direction by a predefined amount.

3. The vehicle control device according to claim 1, wherein
the travel route setting unit is configured to sequentially set, in the powerable section, a plurality of travel routes at different travel positions in the lateral direction, sequentially measure a plurality of amounts of received power from the in-motion power transfer system during travel along respective ones the plurality of travel routes, and set, as the travel route to travel in a remaining portion of the powerable section, the travel position in the lateral direction corresponding to a maximum amount of received power among the plurality of measured amounts of received power.

4. The vehicle control device according to any one of claims 1 to 3, further comprising
a charging planning unit (113) configured to acquire information about the powerable section and use the acquired information about the powerable section to devise a charging plan during travel of the vehicle, wherein
the travel route setting unit is configured to set the travel route of the vehicle using the charging plan devised by the charging planning unit.

5. The vehicle control device according to any one of claims 1 to 3, further comprising
a notification unit (114) configured to provide a notification via a notification device (150) of guidance information to the travel route set by the travel route setting unit.

6. The vehicle control device according to any one of claims 1 to 3, further comprising
a control determination unit (115) configured to determine controls for driving the vehicle, wherein
the control determination unit is configured to, when another vehicle is traveling in an adjacent lane to a lane in which the vehicle is traveling in the powerable state, determine the controls by changing a longitudinal position of the vehicle relative to the other vehicle so as to cause the vehicle to move away from the other vehicle.

7. The vehicle control device according to any one of claims 1 to 3, wherein the travel route setting unit is configured to set the travel route with respect to lane link information included in the HD map.

8. The vehicle control device according to any one of claims 1 to 3, wherein the vehicle is capable of both autonomous driving and manual driving along the travel route set by the travel route setting unit.
